(19) **Europäisches Patentamt / European Patent Office / Office européen des brevets**

(11) **EP 3 557 484 B1**

(12) **EUROPEAN PATENT SPECIFICATION**

(45) Date of publication and mention of the grant of the patent:
**17.11.2021 Bulletin 2021/46**

(21) Application number: **17882134.4**

(22) Date of filing: **14.12.2017**

(51) Int Cl.:
*G06N 3/04* (2006.01)    *G06N 3/063* (2006.01)

(86) International application number:
**PCT/CN2017/116161**

(87) International publication number:
**WO 2018/108126 (21.06.2018 Gazette 2018/25)**

(54) **NEURAL NETWORK CONVOLUTION OPERATION DEVICE AND METHOD**

VORRICHTUNG UND VERFAHREN FÜR FALTUNGSOPERATIONEN EINES NEURONALEN NETZES

DISPOSITIF ET PROCÉDÉ POUR OPÉRATION DE CONVOLUTION DE RÉSEAU NEURONAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2016 CN 201611152537**

(43) Date of publication of application:
**23.10.2019 Bulletin 2019/43**

(73) Proprietor: **Shanghai Cambricon Information Technology Co., Ltd**
**Beijing 100191 (CN)**

(72) Inventors:
• **CHEN, Yunji**
  **Shanghai 201203 (CN)**
• **ZHUANG, Yimin**
  **Shanghai 201203 (CN)**
• **LIU, Shaoli**
  **Shanghai 201203 (CN)**
• **GUO, Qi**
  **Shanghai 201203 (CN)**
• **CHEN, Tianshi**
  **Shanghai 201203 (CN)**

(74) Representative: **AWA Sweden AB**
**P.O. Box 5117**
**200 71 Malmö (SE)**

(56) References cited:
**CN-A- 104 915 322    CN-A- 105 512 723**
**CN-A- 106 066 783    CN-A- 106 203 617**
**US-A- 5 473 730**

• **PARK HYUNSUN ET AL: "Zero and data reuse-aware fast convolution for deep neural networks on GPU", 2016 INTERNATIONAL CONFERENCE ON HARDWARE/SOFTWARE CODESIGN AND SYSTEM SYNTHESIS (CODES+ISSS), ACM, 2 October 2016 (2016-10-02), pages 1-10, XP033002570, [retrieved on 2016-11-21]**
• **TAN, FUPING et al.: "ANew Scheme to Divide Odd-Sized Matrices for the Winograd's Algorithm", Communication on Applied Mathematics and Computation, vol. 18, no. 1, 30 June 2004 (2004-06-30), pages 92-96, XP009515379,**

**Description**

**Technical Field**

The present disclosure relates to the technical field of artificial neural network. Specifically, the present disclosure relates to a neural network convolution operation device and method thereof.

**Background**

Multi-layer artificial neural network is widely used in the field of pattern recognition, image processing, function approximation, optimality computation and the like. Multi-layer artificial networks have drawn the attention of academic circle and industrial community in recent years due to high recognition accuracy and good parallelism.

In order to adapt to the increasingly high task requirements, the size of the neural network is increasingly large. At present, a large convolution neural network contains hundreds of layers of network layer structure. An accompanying problem is that the neural network needs to perform more operations. Particularly in the convolution neural network, large amount of convolution reduces the calculating speed of the neural network, which affects the use of neural network in practical applications.

The article "Zero and Data Reuse-aware Fast Convolution for Deep Neural Networks on GPU" by Park Hyunsun et al, 2016 International Conference on Hardware/Software Codesign and System Synthesis (Codes+ISSS), ACM, 2 October 2016, page 1-10, XP033002570 presents a concept of enhancing performance of the state-of-the-art convolution algorithm (called Winograd convolution) on a GPU. Document CN 105 512 723 A discloses a mapping unit to handle sparse connections in hardware implementation of an artificial neural network.

**Summary**

In view of this, the purpose of the present disclosure is to provide a neural network convolution operation device and method to solve at least part of the technical problems.

The invention is defined by the appended independent claims to which reference should be made.

Advantageous features are set out in the appended dependent claims.

One aspect of the present disclosure provides a neural network convolution operation device to implement convolution of a weight matrix and neurons in the neural network in the manner of matrix multiplication, the neural network convolution operation device comprising an arithmetic unit and a controller,

wherein the arithmetic unit comprises a shift arithmetic unit and a matrix multiplier;
the shift arithmetic unit performing winograd transformation on the neuron matrix and the weight matrix respectively to obtain a transformed neuron matrix and a transformed weight matrix;
the matrix multiplier performing a matrix multiplication operation on the transformed neuron matrix and the transformed weight matrix to obtain a multiplication matrix;
the shift arithmetic unit performing a winograd inverse transformation on the multiplication matrix to obtain a convolution result; the controller controlling winograd transformation or winograd inverse transformation on the shift arithmetic unit and a matrix multiplication operation on the matrix multiplier.

In further embodiments, on-chip cache is configured to store the neuron matrix, the weight matrix, the transformed matrix C and the transformed matrix G, in which the transformed matrix C performs winograd transformation on the neuron matrix and the transformed matrix G performs winograd transformation on the weight matrix.

In further embodiments, the values of elements in the transformed matrix C and the transformed matrix G are $\pm 2^n$ or 0, and n is an integer.

In further embodiments, the on-chip cache is further configured to store the matrix performing a winograd inverse transformation and store the inverse transformed matrix A performing a winograd inverse transformation on the neuron matrix.

In further implementation, the values of elements in the inverse transformed matrix A are $\pm 2^n$ or 0, and n is an integer.

In further embodiments, the controller is configured to control the shift arithmetic unit to shift the binary values of each element in the neuron matrix or the weight matrix left or right independently according to the transformed matrix C or the transpose matrix $C^T$; or control the shift arithmetic unit to shift the binary values of each element in the weight matrix left or right independently according to the values of elements in the transformed matrix G or the transpose matrix $G^T$.

In further embodiments, the controller shifts the binary values of each element in the multiplication matrix left or right independently according to the values of elements in the inverse transformed matrix A or the transposition matrix $A^T$.

In the embodiments, falling within the scope of the appended claims, the arithmetic unit further includes sparse processing units to sparsely process the transformed weight matrix to generate a binary sparse sequence, in which "0" corresponds to the element of which the value is "0" in the transformed weight matrix and " 1" corresponds to the element of which the value is not "0" in the transformed weight matrix; preferably, the bits sorted from high to low in the sparse sequence correspond to the elements read row by row or column by column in the transformed weight matrix.

The arithmetic unit falling within the scope of the appended claims further includes mapping units, which are configured to generate a mapping table between a sparse sequence and the element position in a transformed neuron matrix. The $K^{th}$ bit of a sparse sequence corresponds to the element locating in the $i^{th}$ row and the $j^{th}$ column of a neuron matrix with M rows and N columns, and $(i-1) \times N+j=K$ or $(j-1) \times M+i=K$.

In the embodiments, falling within the scope of the appended claims, the controller is configured to control the matrix multiplier to perform matrix multiplication operations according to the mapping table, in which the element in the neuron matrix corresponding to the bit "0" in the sparse sequence does not perform matrix multiplication operations.

In further embodiments, an adder is included to accumulate the results of the shift operation performed by the shift arithmetic unit according to the rules of matrix multiplication when winograd transformation is performed on the neuron matrix and the weight matrix respectively.

In further embodiments, a data cache unit is included to cache the sparse sequence and the mapping table.

On the other hand, the present disclosure provides a convolution method which can use all the convolution devices for neural network, including:

performing winograd transformation on the neuron matrix and the weight matrix respectively with a shift operator and an adder to obtain a transformed neuron matrix and a transformed weight matrix;

performing a matrix multiplication operation on the transformed neuron matrix and the transformed weight matrix with a matrix multiplier to obtain a multiplication matrix;

performing a winograd inverse transformation on the multiplication matrix with a shift arithmetic unit and an adder to obtain a convolution result. controlling winograd transformation or winograd inverse transformation on the shift arithmetic unit and a matrix multiplication operation on the matrix multiplier with a controller.

In further embodiments, on-chip cache is further configured to store the matrix performing a winograd inverse transformation and the inverse transformed matrix A performing a winograd inverse transformation on the neuron matrix.

In further implementation, the values of elements in the inverse transformed matrix A are $\pm 2^n$ or 0, and n is an integer.

Further implementations include obtaining the transformed matrix C which performs winograd transformation on the neuron matrix, obtaining the transformed matrix D which performs winograd transformation on the weight matrix and storing the inverse transformed matrix A which performs a winograd inverse transformation on the neuron matrix, including:

receiving data about the dimension of the input neuron matrix and the weight matrix as well as the slides of convolution;

based on the received data, determining the transformed matrix C, the transformed matrix G and the inverse transformed matrix A according to the winograd algorithm.

In further embodiments, the controller is configured to control the shift arithmetic unit to shift the binary values of each element in the neuron matrix or the weight matrix left or right independently according to the transformed matrix C or the transpose matrix $C^T$; or control the shift arithmetic unit to reset or shift the binary values of each element in the weight matrix left or right independently according to the values of elements in the transformed matrix G or the transpose matrix $G^T$.

In further embodiments, the controller shifts the binary values of each element in the multiplication matrix left or right independently according to the values of elements in the inverse transformed matrix A or the transposition matrix $A^T$.

In the embodiments, falling within the scope of the appended claims, the arithmetic unit further includes sparse processing units to sparsely process the transformed weight matrix to generate a binary sparse sequence, in which "0" corresponds to the element of which the value is "0" in the transformed weight matrix and " 1" corresponds to the element of which the value is not "0" in the transformed weight matrix; preferably, the bits sorted from high to low in the sparse sequence correspond to the elements read row by row or column by column in the transformed weight matrix.

In the embodiments, falling within the scope of the appended claims, the arithmetic unit further includes mapping units to generate a mapping table between a sparse sequence and the element position in a transformed neuron matrix. The $K^{th}$ bit of a sparse sequence corresponds to the element locating in the $i^{th}$ row and the $j^{th}$ column of a neuron matrix with M rows and N columns, and (i-1) $\times$N+j=K or (j-1)$\times$M+i=K.

In the embodiments, falling within the scope of the appended claims, the controller is configured to control the matrix multiplier to perform matrix multiplication operations according to the mapping table, in which the element in the neuron matrix corresponding to the bit "0" in the sparse sequence does not perform matrix multiplication operations.

In further embodiments, an adder is included to accumulate the results of the shift operation performed by the shift arithmetic unit according to the rules of matrix multiplication when winograd transformation is performed on the neuron matrix and the weight matrix respectively.

In further embodiments, a data cache unit is included to cache the sparse sequence and the mapping table.

One other aspect of the present disclosure, not forming part of the invention, provides a neural network convolution operation device, including one or a plurality of the convolution devices for neural network to receive pending data, control information and performing neural network operation.

One other aspect of the present disclosure, not forming part of the invention, provides a combined processing device, including the operating devices for neural network, a general interconnection interface and other processing devices configured to perform non-neural network operations. The other processing devices connect with the operating devices for neural network through a general interconnection interface.

One other aspect of the present disclosure, not forming part of the invention, provides a chip, which is characterized in that it includes the operating devices for neural network or the combined processing device.

One other aspect of the present disclosure, not forming part of the invention, provides an electronic device, including the chip.

The shift arithmetic unit of the present disclosure can completely replace the multiplier when performing the winograd transformation and the inverse transformation on a neuron matrix and a weight matrix. The multiplication operation can be performed only by the shift operation.

The present disclosure can transform a complex convolution operation into a sparse matrix multiplication operation, and the process of transformation and inverse transformation can be performed by bit operation. By this way, the amount of calculation required for convolution is greatly reduced, which improves the calculating speed of the neural network and significantly improves data processing efficiency.

By using sparse units to generate sparse sequences, the present disclosure can reduce the storage space required to store network parameters and reduce the bandwidth of memory access. The present disclosure can further reduce multiplication operation and save the cost when performing a matrix multiplication operation on the transformed neuron matrix and the transformed weight matrix.

## Brief Description of The Drawings

Fig. 1 schematically shows a structural diagram of a neural network convolution operation device according to an embodiment of the present disclosure.

Fig. 2 schematically shows a flow chart of a neural network convolution operation method according to the embodiment of the present disclosure.

Fig. 3 schematically shows a mapping table according to the embodiment of the present disclosure.

Fig. 4 schematically shows a diagram of a convolution.

Fig. 5 schematically shows a process of performing the convolution of Fig. 4 according to the embodiment of the present application, with reference to the device described in the embodiment of the present disclosure.

Fig. 6 schematically shows a structural diagram of a combined processing device according to the embodiment of the present disclosure.

## Detailed Description of The Embodiments

Other aspects, advantages and prominent features of the present disclosure will become apparent to those skilled in the art according to the following description of exemplary embodiments of the present disclosure with reference to the accompanied drawings.

In the present disclosure, the terms "include" and "comprise" and their derivatives are intended to be inclusive rather than to limit; the term "or" is inclusive, meaning "and/or".

In the present specification, the following description of various embodiments for explaining the principles of the present disclosure is merely for illustrative, and should not be interpreted as limiting the scope of the appended claims in any way. Numerous specific details are included in the description to help understanding, but these details should be considered to be merely exemplary. Accordingly, it will be appreciated by those having ordinary skills in the art that various changes and modifications can be made to the embodiments described herein without departing from the scope of the appended claims.

In addition, to be clear and concise, the description of well-known functions and structures is omitted. Moreover, throughout the accompanied drawings, the same reference numerals are used for similar functions and operations.

Block diagrams and/or flowcharts are shown in the accompanied drawings. It is appreciated that some blocks or a combination thereof in the block diagrams and/or the flowcharts can be implemented by computer program instructions. These computer program instructions may be provided to a processor of a general computer, a dedicated computer or other programmable data processing apparatus such that when the instructions are executed by the processor, a device for realizing the functions/operations described in the block diagrams and/or flowcharts may be generated.

Therefore, the technology of the present disclosure can be implemented in the form of hardware and/or software (including firmware, microcode, etc.). In addition, the technology of the present disclosure can take the form of a computer program product on a computer readable medium storing instructions to be executed by an instruction execution system.

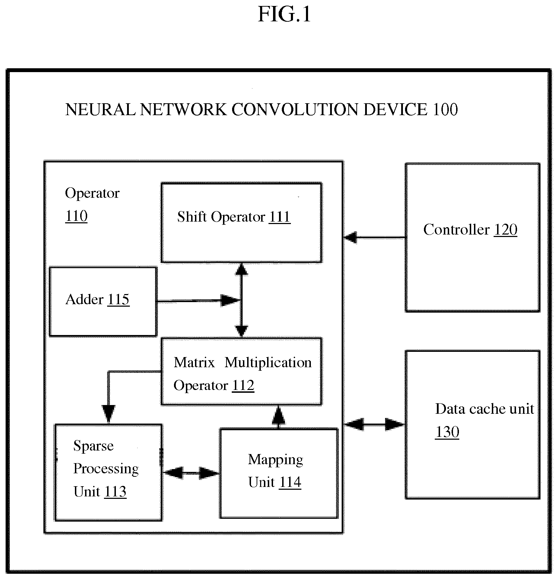

Fig. 1 schematically shows a structural diagram of a neural network convolution operation device of the embodiment of the present disclosure, falling within the scope of the appended claims. As shown in Fig. 1, the neural network convolution operation device 100 includes the arithmetic unit 110 and the controller 120, wherein the arithmetic unit 110 includes the shift arithmetic unit 111 and the matrix multiplier 112.

The shift arithmetic unit 111 is configured to perform a winograd transformation on the neuron matrix and the weight matrix respectively to obtain the transformed neuron matrix and the transformed weight matrix. The matrix multiplier 112 is configured to perform the matrix multiplication operation which multiplies the transformed neuron matrix and the transformed weight matrix together to obtain the multiplication matrix; after obtaining the multiplication matrix, the shift arithmetic unit 111 is configured to perform an inverse winograd transformation on the multiplication matrix to obtain a convolution result. The controller 120 in the embodiment of the present disclosure is configured to control the shift arithmetic unit 111 to perform the winograd transformation or the inverse winograd transformation, and control the matrix multiplier 112 to perform the matrix multiplication operation.

In some embodiments, the device further includes an on-chip cache configured to store the neuron matrix, the weight matrix, the transformation matrix C which performs winograd transformation on the neuron matrix and the transformation matrix G which performs winograd transformation on the weight matrix. The on-chip cache can be a high-speed cache register. The values of elements in the transformed matrix C and the transformed matrix G are $\pm 2^n$ or 0 independently, and n is an integer. The "independence" here means the values of elements in the two transformed matrices satisfy the conditions separately. The on-chip cache includes an input neuron cache, an output neuron cache, a weight cache, and two other caches, in which the input neuron cache specifically stores neural matrices, the weight cache specifically stores weight matrices, the two other caches specifically store the transformed matrix C and the transformed matrix G, or any two of the input neuron cache, the output neuron cache or the weight cache can be configured to store the transformed matrix C and the transformed matrix G.

In some embodiments, on-chip cache is configured to store the matrix to be performed a winograd inverse transformation and store the inverse transformed matrix A performing a winograd inverse transformation on the neuron matrix. The values of elements in the inverse transformed matrix A are $\pm 2^n$ or 0, and n is an integer.

In some embodiments, the controller 120 is configured to control the shift arithmetic unit to shift the binary values of each element in the neuron matrix or the weight matrix left or right independently according to the transformed matrix C or the transpose matrix $C^T$ thereof; or control the shift arithmetic unit to reset or shift the binary values of each element in the weight matrix left or right independently according to the values of elements in the transformed matrix G or the transpose matrix $G^T$ thereof. Since all the elements in the matrix C and the matrix G are either two power exponents or integer multiples, the multiplication of corresponding elements between the matrix C and the neuron matrix can be realized by resetting or shifting left or right.

In some embodiments, the controller is configured to shift the binary values of each element in the multiplication matrix left or right independently according to the inverse transformed matrix A or the transpose matrix $A^T$ thereof.

In the embodiments, falling within the scope of the appended claims, the sparse processing unit 113 is included to sparsely process the transformed weight matrix to generate a binary sparse sequence, wherein "0" corresponds to the element which values "0" in the transformed weight matrix, and "1" corresponds to the element which does not value "0" in the transformed weight matrix; preferably, the bits sorted from high to low in the sparse sequence correspond to the elements read row by row or column by column in the transformed weight matrix.

In the embodiments, falling within the scope of the appended claims, the mapping unit 114 is included to generate a mapping table between a sparse sequence and the position of an element in a transformed neuron matrix. The $K^{th}$ bit of a sparse sequence corresponds to the element locating in the $i^{th}$ row and the $j^{th}$ column of a neuron matrix with M rows and N columns, and $(i-1) \times N+j=K$ or $(j-1) \times M+i=K$.

In the embodiments, falling within the scope of the appended claims, the controller 120 is configured to control the matrix multiplier 112 to perform matrix multiplication operations according to the mapping table, in which the element in the neuron matrix corresponding to the bit "0" in the sparse sequence does not perform matrix multiplication operations. Since two matrices are multiplied together (e.g., the element locating in the $i^{th}$ row and $j^{th}$ column of the first matrix multiplies the element locating in the $i^{th}$ row and $j^{th}$ column of the second matrix, and the result is the element locating in the $i^{th}$ row and $j^{th}$ column of the result matrix), the matrix multiplier 112 mainly includes one or a plurality of multipliers.

In some embodiments, the adder 115 is included to accumulate the results of the shift operation performed by the shift arithmetic unit according to the rules of matrix multiplication when winograd transformation is performed on the neuron matrix and the weight matrix respectively. For example, when two $3 \times 3$ matrices are multiplied and the winograd transformation as well as the winograd inverse transformation are performed, the values of the elements locating in the first row and the first column of the result matrix are determined by the three elements locating in the first row of the first matrix and the three corresponding elements locating in the first column of the second matrix. The three products are then accumulated by the adder 115 to obtain the final result locating in the first row and the first column of the first matrix.

In some embodiments, the data cache unit 130 is further included to cache the sparse sequence and the mapping table.

With regard to the specific functions of each part in the neural network convolution operation device 100, further explanations will be shown below with the convolution methods.

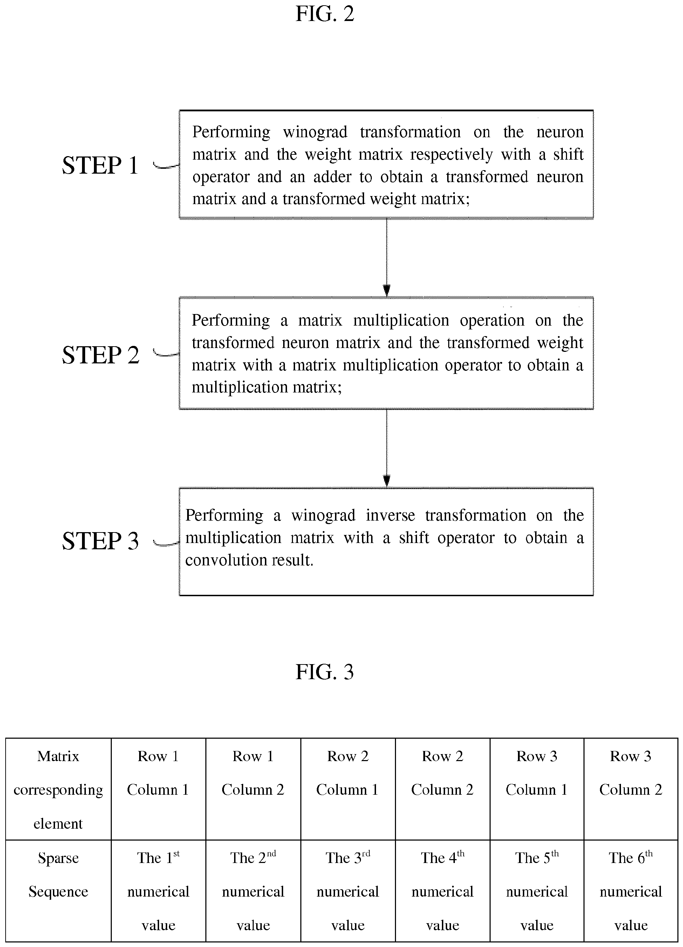

Fig. 2 schematically shows a flow chart of a convolution method for neural network according to the embodiments of the present disclosure. As shown in Fig. 2, the method includes the following steps.

In Step 1, winograd transformation is performed by the shift arithmetic unit 111 and the adder 115 to obtain a transformed neuron matrix and a transformed weight matrix.

In this step, winograd transformation is performed on the neuron matrix do and the weight matrix $\mathbf{w_0}$ using the equations below to obtain the transformed neuron matrix $\mathbf{d}$ and the transformed weight matrix $\mathbf{w}$.

$$\mathbf{d} = \mathbf{C^T d_0 C}, \quad \mathbf{w} = \mathbf{G w_0 G^T},$$

wherein $\mathbf{C}$ is a transformation matrix of the neuron matrix $\mathbf{do}$. $\mathbf{C^T}$ is a transposed matrix of $\mathbf{C.G}$ is a transformation matrix of the weight matrix $\mathbf{w_0}$ and $\mathbf{G^T}$ is a transposed matrix $\mathbf{of\ G}$.

The transformation matrixes $\mathbf{C}$ of the neuron matrix $\mathbf{do}$ and the transformation matrixes G of the weight matrix $\mathbf{wo}$ are obtained by winograd algorithm

In order to facilitate understanding, winograd algorithm is briefly introduced here. The winograd algorithm uses a block multiplication of matrix to reduce the times of multiplication in a matrix multiplication operation. The algorithm has various matrix partition methods and a winograd algorithm is described below:

performing matrix multiplication $C=AB$ to partition each matrix, obtaining

$$A = \begin{bmatrix} A_{11} & A_{12} \\ A_{21} & A_{22} \end{bmatrix}, B = \begin{bmatrix} B_{11} & B_{12} \\ B_{21} & B_{22} \end{bmatrix}, C == \begin{bmatrix} C_{11} & C_{12} \\ C_{21} & C_{22} \end{bmatrix}$$

let

$S_1 = A_{21} + A_{22}, S_2 = S_1 - A_{11}, S_3 = A_{11} - A_{21}, S_4 = A_{12} - S_2$
$S_5 = B_{12} - B_{11}, S_6 = B_{22} - S_5, S_7 = B_{21} - B_{12}, S_8 = S_6 - B_{21}$
$M_1 = S_2 S_6, M_2 = A_{11} B_{11}, M_3 = A_{12} B_{21}, M_4 = S_3 S_7$
$M_5 = S_1 S_5, M_6 = S_4 B_{12}, M_7 = A_{22} S_8$
$T_1 = M_1 + M_2, T_2 = T_1 + M_4$

then

$C_{11} = M_2 + M_3 + M_6, C_{12} = T_1 + M_5$
$C_{21} = T_2 - M_7, C_{22} = T_2 + M_5$

The transformation matrix required for the convolution is obtained through the winograd algorithm; for example, for a one-dimension convolution $[d_1, d_2, d_3]*[w_1, w_2]$, supposing that each convolution slides 1 step, the convolution can be expanded to a form of matrix multiplication

$$\begin{bmatrix} d_1, d_2 \\ d_2, d_3 \end{bmatrix} \begin{bmatrix} w_1 \\ w_2 \end{bmatrix} = \begin{bmatrix} output_1 \\ output_2 \end{bmatrix}$$

thus performing the winograd algorithm to obtain

$M_1 = (-a_1, + a_2 + a_3)b_1$, $M_2 = a_1b_1$, $M_3 = a_2b_2$, $M_4 = 0$
$M_5 = (a_2 + a_3)(-b_1)$, $M_6 = 0$, $M_7 = a_3(b_1 - b_2)$
$output_1 = M_2 + M_3 + M_6$, $output_2 = M_1 + M_2 + M_4 - M_7$

which can be rewritten as below with items valuing 0 and non-configured parts being removed:

$m_1 = (-a_1 + a_2 + a_3)b_1$, $m_2 = a_1b_1$, $m_3 = a_2b_2$, $m_4 = a_3(b_1 - b_2)$
$output_1 = m_2 + m_3$, $output_2 = m_1 + m_2 - m_4$

then obtaining the transformation matrix for convolution

$$C = \begin{bmatrix} -1 & 1 & 0 & 0 \\ 1 & 0 & 1 & 0 \\ 1 & 0 & 0 & 1 \end{bmatrix}, G = \begin{bmatrix} 1 & 0 \\ 1 & 0 \\ 0 & 1 \\ 1 & -1 \end{bmatrix}, A = \begin{bmatrix} 0 & 1 \\ 1 & 1 \\ 1 & 0 \\ 0 & 1 \end{bmatrix}$$

The methods for obtaining the transformed matrix are only exemplary and should not be interpreted as limiting the scope of the appended claims. As for a higher-dimension matrix, the matrix can be partitioned for several times to obtain the transformed matrix for convolution. The winograd algorithm has various matrix partition methods. For the same matrix partition method, the specific value and dimension of the transformation matrix are determined by the dimension of the input neuron and weight matrix, and by the convolution slide step. The specific transformation method can refer to the existing winograd algorithm.

From the algorithm, it can be seen that the specific value and dimension of the transformation matrix are determined by the dimension of the input neuron and weight matrix. Specific affecting factors include the dimension of the input neuron, the dimension of the weight matrix and the slide step of each convolution operation. As the three factors are determined, the value and dimension of each transformation matrix are determined. Since the three affecting factors are preset in a neural network structure, the present embodiment operates offline or in the pre-processing stage to complete configuration of each transformation matrix.

In addition, values in the neuron matrix and the weight matrix are binary. Values of the elements in the transformation matrixes **C** and **G** are $\pm 2^n$ or 0, for example, -2, -1, -0.5, 0, 0.5, 1, 2 etc. Thus, the embodiment of the present disclosure performs winograd transformation by bit operations, and implements operations of multiplying by 2 and dividing by 2 by shifting left and right. For example, when a value in the neuron matrix **do** is multiplied by 0.5, the value is shifted to the right by one bit; when multiplied by -0.5, the value is shifted to the left by one bit and the highest bit is inverted. Therefore, specific multipliers are not needed in this step and the whole matrix operation can be completed only by the shift arithmetic unit 111 and the adder 115. The embodiment of the present disclosure implements winograd transformation by bit operations, which reduces the amount of calculation and improves the calculating speed.

In Step 2, the transformed neuron matrix and the transformed weight matrix are subjected to an operation of matrix multiplication through the matrix multiplication operation 112, obtaining a multiplication matrix **t**:

$$\mathbf{t} = \mathbf{w} \odot \mathbf{d}$$

It should be noted that in a common convolution, the two matrixes involved in the operation may have different sizes. Therefore, a slide operation is required to perform multiple times of matrix multiplication operation. However, in the embodiment of the present disclosure, the transformed neuron matrix **d** and the weight matrix **w** conform to the rules of matrix multiplication; that is, only one matrix multiplication operation is performed, which greatly reduces the calculation amount.

In addition, when two matrixes are multiplied, if the value of some elements in a matrix is known to be 0, the value obtained by multiplying the elements and corresponding elements in the other matrix must be 0. Thus, in the actual data calculation process, the process can actually be saved in the operation, so as to omit unnecessary calculation. Therefore, the embodiment of the present disclosure, falling within the scope of the appended claims, maps the transformed weight matrix to a sparse sequence of "0" and "1" through the sparse processing unit 113, in which "0" corresponds to the element valuing "0" in the transformed weight matrix; and "1" corresponds to the element of which the value is not 0 in the transformed weight matrix. With reference to Fig.3, a mapping table between a sparse sequence and the position of an element in a transformed neuron matrix is generated by the mapping unit 114. The $K^{th}$ bit of the sparse sequence corresponds to the element locating in the $i^{th}$ row and the $j^{th}$ column of a neuron matrix with M rows and N columns, and $(i-1) \times N+j=K$ or $(j-1) \times M+i=K$. In a matrix multiplication operation, elements in the corresponding position in the transformed neuron matrix are extracted based on "1" recorded in the sparse sequence so as to be multiplied by corresponding elements in the transformed weight matrix.

For example,

$$\mathbf{d} = \begin{bmatrix} 0 & 0 & 0 & 0 \\ -1 & 3 & 1 & -1 \\ 1 & -1 & 1 & -1 \\ 0 & 1 & -1 & 1 \end{bmatrix}, \mathbf{w} = \begin{bmatrix} 1 & 0.5 & 0.5 & 0 \\ 1.5 & 1.25 & 0.25 & 0 \\ 0.5 & 0.25 & 0.25 & 0 \\ 1 & 1 & 0 & 0 \end{bmatrix},$$

wherein w corresponds to a sparse sequence of 1110111011101100 (read row by row or column by column). In the matrix multiplication operation, according to the sequence, it is known that $[d_{03}, d_{13}, d_{23}, d_{32}, d_{33}]$ in the transformed neuron matrix are not involved in the operation. Therefore, using a sparse sequence can further reduce the amount of calculation for the matrix multiplication operation. In the practical application of neural network, sparse sequence can be completed offline, and the storage space occupied by sparse sequence is very small as compared with the storage space released by sparse operation, so this process does not affect the operation speed and the storage space of neural network.

In Step 3, winograd inverse transformation is performed on the multiplication matrix through the shift arithmetic unit 111 and the adder 115 to obtain a convolution result.

In the step, the equation described below is configured to perform winograd inverse transformation on the multiplication matrix **t,** obtaining the operation result **output:**

$$\mathbf{output} = \mathbf{A^T t A},$$

wherein **A** is an inverse transformation matrix, and **A**$^T$ is a transposed matrix of **A.**

It should be noted that the inverse transformation matrix **A** is obtained by winograd algorithm, similarly as **C** and **G.** The specific process will not be repeated herein. In addition, the value of the inverse transformation matrix **A** is also $\pm 2^n$ or 0 and n is an integer. The operation of values is also realized by bit operation.

It should be noted that in the three steps, the controller is further needed to control the shift arithmetic unit to perform winograd transformation and winograd inverse transformation as well as control the matrix multiplier to perform matrix multiplication operation.

A specific example is shown below to further explain the process of convolution through the neural network convolution operation device in the embodiment of the present disclosure.

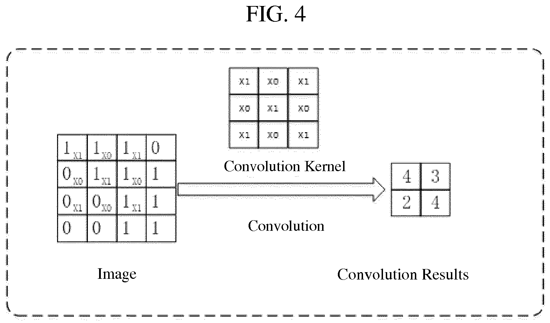

Fig. 4 schematically shows a diagram of a convolution. As shown in Fig. 4, the convolution kernel is a 3×3 matrix. The convolution kernel slides on the input image. The convolution kernel shown in Fig. 4 is the layer weight matrix of the present disclosure and the input image is the neuron matrix of the present disclosure.

For the convolution operation commonly configured in the neural network, assuming that each time a pixel is slid, a total of four convolution operations are required; and for each convolution operation, the convolution kernel and the corresponding input image data are multiplied and added. Therefore, for different output neurons on the same output profile, different input neurons are required; while the weight and connection relationship are the same. For example, the computation of the first convolution result is: 1*1+1*0+1*1+0*0+1*1+1*0+0*1+0*0+1*1=4; the calculation of the second convolution result is:

1*1+0*1+1*0+1*0+1*1+1*0+0*1+1*0+1*1=3, and the like.

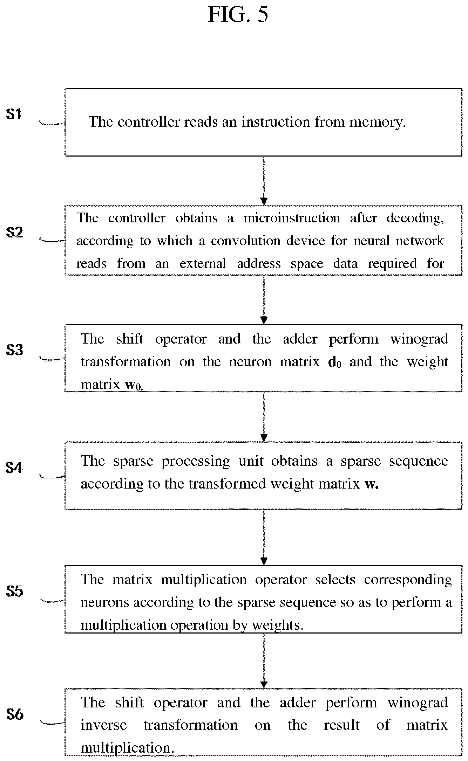

Fig. 5 schematically shows a process of performing the convolution of Fig. 4 according to the embodiment of the present disclosure, with reference to the device described in the embodiment of the present disclosure. As shown in Fig. 5:

In Step S1, the controller 120 reads an instruction from the on-chip cache.

In step S2, the controller 120 obtains a microinstruction after decoding and then the neural network convolution operation device 100 reads from an external address space data required for performing the convolution according to the microinstruction, including the neuron matrix **do** and the weight matrix **wo**. And then, the transformation matrixes **C, G,** and the inverse transformation matrix **A** are obtained. In the example shown in Fig. 4:

$$\mathbf{d_0} = \begin{bmatrix} 1 & 0 & 1 & 1 \\ 0 & 1 & 1 & 1 \\ 1 & 0 & 1 & 1 \\ 0 & 0 & 1 & 1 \end{bmatrix}, \mathbf{w_0} = \begin{bmatrix} 1 & 0 & 0 \\ 1 & 1 & 0 \\ 1 & 1 & 0 \end{bmatrix}$$

In step S3, the shift arithmetic unit 111 reads the neuron matrix $\mathbf{d_0}$ and the weight matrix $\mathbf{w_0}$ respectively from the on-chip cache or data cache unit, and performs winograd transformation on the neuron matrix $\mathbf{d_0}$ and the weight matrix $\mathbf{w_0}$ with the adder 115, i.e.,

$$\mathbf{d} = \mathbf{C}^{\mathrm{T}}\mathbf{d_0}\mathbf{C} = \begin{bmatrix} 0 & 0 & 0 & 0 \\ -1 & 3 & 1 & -1 \\ 1 & -1 & 1 & -1 \\ 0 & 1 & -1 & 1 \end{bmatrix}, \mathbf{w} = \mathbf{G}\mathbf{w_0}\mathbf{G}^{\mathrm{T}} = \begin{bmatrix} 1 & 0.5 & 0.5 & 0 \\ 1.5 & 1.25 & 0.25 & 0 \\ 0.5 & 0.25 & 0.25 & 0 \\ 1 & 1 & 0 & 0 \end{bmatrix}$$

In step S4, the sparse processing unit 113 obtains a sparse sequence according to the transformed weight matrix **w,** which is [1110111011101100]. According to the mapping table of the mapping unit 114, the sequence traverses the weight matrix, marks the elements of which the values are not 0 in the weight matrix with bit "1" and marks the elements of which the values are 0 with bit "0", thereby obtaining a bit sequence as the sparse sequence. The length of the sparse sequence is consistent with the number of values in the weight matrix.

In step S5, the matrix multiplication operator 115 selects corresponding neurons and weight according to the sparse sequence so as to perform a multiplication operation and completes the matrix multiplier which multiplies the input neuron and the weight together, <u>wherein</u> by indexing sequence, $[d_{03}, d_{13}, d_{23}, d_{32}, d_{33}]$ in the transformed neuron matrix **d** do not participate in the operation, thereby obtaining the operation result:

$$\mathbf{t} = \mathbf{w} \odot \mathbf{d} = \begin{bmatrix} 0 & 0 & 0 & 0 \\ -1.5 & 3.75 & 0.25 & 0 \\ 0.5 & -0.25 & 0.25 & 0 \\ 0 & 1 & 0 & 0 \end{bmatrix}$$

In step S6, the shift arithmetic unit 111 and the adder 115 perform winograd inverse transformation on the result of matrix multiplication, obtaining an output:

$$\mathbf{output} = \mathbf{A}^{\mathrm{T}}\mathbf{t}\mathbf{A} = \begin{bmatrix} 3 & 3 \\ 1 & 3 \end{bmatrix}.$$

The present disclosure further discloses a neural network convolution operation apparatus, which includes at least one neural network convolution operation device referred in the present disclosure. The apparatus is configured to receive pending data and control information from other processing devices and perform specific operations of neural network. The operation results are transmitted to peripheral devices through I/O interfaces. Peripheral devices include cameras, monitors, mice, keyboards, network cards, wifi interfaces and servers. When more than one neural network convolution operation device are included, the neural network convolution operation devices can link and transmit data to each other through a specific structure, such as interconnection and transmission of data through PCIE bus, so as to support a larger scale of operation of neural network. As a result, the same control system can be shared; and separate control systems can also be built; memory can be shared and each accelerator can have its own memory. In addition, the interconnection mode can be any forms of interconnection topology.

The operating device for neural network has high compatibility and can be connected to various types of servers through PCIE interface.

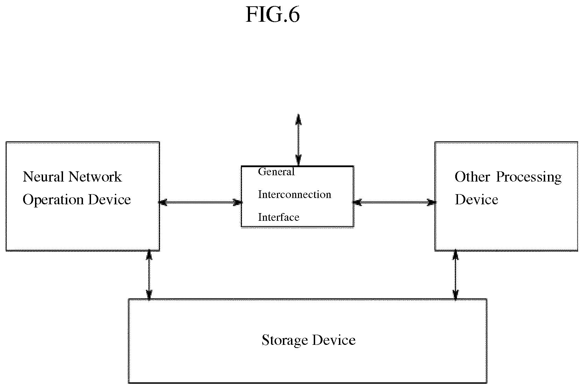

The present disclosure also discloses a combined processing device which includes the neural network convolution operation device, a general interconnection interface and other processing devices. The neural network convolution operation device interacts with other processing devices (configured to perform non-neural network operations) to complete user-specified operations together. Fig. 6 is a structural diagram of a combined processing device.

Other processing devices include one or a plurality of general or application-specific processors such as CPU, GPU, neural network processor and the like. The number of processors included in other processing devices is not limited. Other processing devices act as the interface between the neural network convolution operation device and the external data and control information, the control information including data transportation, to complete the basic control for the neural network convolution operation device such as opening and stopping; other processing devices can also cooperate with the neural network convolution operation device to complete the operation tasks.

A general interconnection interface is configured to transmit data and control instructions between the neural network convolution operation device and other processing devices. The neural network convolution operation device obtains the needed input data from other processing devices and writes the data into the storage device on the chip of the neural network convolution operation device; the device can obtain control instructions from other processing devices and write them into the control cache on the chip of the neural network convolution operation device; the device can also read the data in the memory block of the neural network convolution operation device and transmit the data to other processing devices.

The combined processing device can be configured as SOC on-chip system for mobile phones, robots, UAVs, video surveillance equipment and the like to effectively reduce the core area of the control part, improve processing speed and reduce overall power consumption. In this case, the general interconnection interface of the combined processing device is connected with some parts of the device. Some components include cameras, displays, mice, keyboards, network cards and wifi interfaces.

In one embodiment, the present disclosure discloses a chip including the neural network convolution operation device or combined processing device.

In one embodiment, the present disclosure discloses a chip package including the chips.

In one embodiment, the present disclosure discloses a board including the chip package.

In one embodiment, the present disclosure discloses an electronic device including the board.

Electronic devices may include data processing devices, robots, computers, printers, scanners, tablets, smart terminals, mobile phones, traffic recorders, navigators, sensors, cameras, cloud servers, cameras, video cameras, projectors, watches, headphones, mobile storage, wearable devices, transportation means, household appliance and/or medical equipment.

The transportation means include aircrafts, ships and/or vehicles; the household appliances include TV, air conditioners, microwave ovens, refrigerators, rice cookers, humidifiers, washing machine, electric lamps, gas stoves and cooker hoods; the medical equipment includes NMR spectrometer, Brightness-mode ultrasound instrument and/or electrocardiograph.

The specific embodiments further explain the purpose, technical solutions and advantageous effects of the present disclosure, within the scope of the appended claims. It should be understood that the foregoing are merely embodiments of the appended claims, and is not intended to limit the scope of the appended claims. Any modification, improvement, etc. to the present disclosure within the scope of the appended claims shall be covered by the protection scope of the appended claims.

**Claims**

1. A neural network convolution operation device (100) for implementing a convolution of a weight matrix and a neuron matrix in a neural network by a matrix multiplication operation, the neural network convolution operation device (100) comprising an arithmetic unit (110) and a controller (120),

   wherein the arithmetic unit (110) comprises a shift arithmetic unit (111) and a matrix multiplier (112), wherein the shift arithmetic unit (111) is configured to perform a winograd transformation on the neuron matrix and the weight matrix respectively, so as to obtain a transformed neuron matrix and a transformed weight matrix; the matrix multiplier (112) is configured to perform the matrix multiplication operation which multiplies the transformed neuron matrix and the transformed weight matrix together, so as to obtain a multiplication matrix;

the shift arithmetic unit (111) is further configured to perform a winograd inverse transformation on the multiplication matrix to obtain a convolution result;

wherein the shift arithmetic unit (111) and the matrix multiplier (112) are connected in a way to enable a bi-directional data communication between the shift arithmetic unit (111) and the matrix multiplier (112);

wherein the controller (120) is configured to control the shift arithmetic unit (111) to perform the winograd transformation or the winograd inverse transformation, and control the matrix multiplier (112) to perform the matrix multiplication operation;

wherein the arithmetic unit (110) further comprises a sparse processing unit (113) configured to sparsely process the transformed weight matrix to generate a binary sparse sequence, wherein "0" corresponds to the element of which the value is "0" in the transformed weight matrix, and " 1" corresponds to the element of which the value is not "0" in the transformed weight matrix;

wherein the sparse processing unit (113) is connected to the matrix multiplier (112) for receiving data from the matrix multiplier (112);

wherein the arithmetic unit (110) further comprises a mapping unit (114) configured to generate a mapping table between the binary sparse sequence and a position of the element in the transformed neuron matrix;

wherein a $K^{th}$ bit of the binary sparse sequence corresponds to the element locating in the $i^{th}$ row and the $j^{th}$ column of the neuron matrix with M rows and N columns, and $(i-1) \times N+j=K$ or $(j-1) \times M+i=K$;

wherein the mapping unit (114) is connected to the matrix multiplier (112) for transmitting data to the matrix multiplier (112), and

the mapping unit (114) and the sparse processing unit (113) are connected in a way to enable a bi-directional data communication between the mapping unit (114) and the sparse processing unit (113);

wherein the controller (120) is also configured to control the matrix multiplier (112) to perform the matrix multiplication operation according to the mapping table, wherein the element in the neuron matrix corresponding to a bit "0" in the binary sparse sequence does not perform the matrix multiplication operation.

2. The neural network convolution operation device (100) according to claim 1, **characterized in that**, the neural network convolution operation device (100) further comprises an on-chip cache to store the neuron matrix, the weight matrix, a transformed matrix C and a transformed matrix G, wherein the transformed matrix C is configured to perform the winograd transformation on the neuron matrix and the transformed matrix G is configured to perform the winograd transformation on the weight matrix.

3. The neural network convolution operation device (100) according to claim 2, **characterized in that**, values of elements in the transformed matrix C and the transformed matrix G are $\pm 2^n$ or 0 respectively, and n is an integer.

4. The neural network convolution operation device (100) according to claim 2, **characterized in that**, the on-chip cache is further configured to store a matrix to be performed, to store the winograd inverse transformation and further to store an inverse transformed matrix A performing the winograd inverse transformation on the neuron matrix.

5. The neural network convolution operation device (100) according to claim 4, **characterized in that**, values of elements in the inverse transformed matrix A are $\pm 2^n$ or 0, and n is an integer.

6. The neural network convolution operation device (100) according to claim 2, **characterized in that**, the controller (120) is configured to control the shift arithmetic unit (111) to shift a binary value of each element in the neuron matrix or the weight matrix left or right independently according to the transformed matrix C or the transpose matrix $C^T$ thereof; or control the shift arithmetic unit (111) to reset or shift a binary value of each element in the weight matrix left or right independently according to the values of elements in the transformed matrix G or the transpose matrix $G^T$ thereof.

7. The neural network convolution operation device (100) according to claim 4, **characterized in that**, the controller (120) is configured to reset or shift the binary values of each element in the multiplication matrix left or right independently according to the inverse transformed matrix A or the transpose matrix $A^T$ thereof.

8. The neural network convolution operation device (100) according to claim 1, **characterized in that**, the bits sorted from high to low in the binary sparse sequence correspond to the elements read row by row or column by column in the transformed weight matrix.

9. The neural network convolution operation device (100) according to claim 1, **characterized in that**, an adder (115) is further comprised to accumulate the results of a shift operation performed by the shift arithmetic unit (111) according to rules of matrix multiplication when the winograd transformation is performed on the neuron matrix and the weight matrix respectively.

10. A convolution method for implementing a convolution of a weight matrix and a neuron matrix in a neural network by a matrix multiplication operation using a neural network convolution operation device (100) comprising an arithmetic unit (110) and a controller (120),

   wherein the arithmetic unit (110) comprises a shift arithmetic unit (111), a matrix multiplier (112), a sparse processing unit (113) and a mapping unit (114),
   wherein the shift arithmetic unit (111) and the matrix multiplier (112) are connected in a way to enable a bi-directional data communication between the shift arithmetic unit (111) and the matrix multiplier (112),
   the sparse processing unit (113) is connected to the matrix multiplier (112) for receiving data from the matrix multiplier (112),
   the mapping unit (114) is connected to the matrix multiplier (112) for transmitting data to the matrix multiplier (112), and
   the mapping unit (114) and the sparse processing unit (113) are connected in a way to enable a bi-directional data communication between the mapping unit (114) and the sparse processing unit (113);
   the convolution method comprising the acts of :

      performing (S3), by using the shift arithmetic unit (111), a winograd transformation on the neuron matrix and the weight matrix respectively with a shift arithmetic unit (111) and an adder (115) to obtain a transformed neuron matrix and a transformed weight matrix;
      performing (S5), by using the matrix multiplier (112), a matrix multiplication operation which multiplies the transformed neuron matrix and the transformed weight matrix together by a matrix multiplier (112) to obtain a multiplication matrix;
      performing (S6), by using the shift arithmetic unit (111), a winograd inverse transformation on the multiplication matrix by the shift arithmetic unit (111) and the adder (115) to obtain a convolution result; and
      controlling, by using the controller (120), the shift arithmetic unit (111) to perform the winograd transformation or the winograd inverse transformation and to control the matrix multiplier (112) to perform the matrix multiplication operation;
      the convolution method further comprising:

         sparsely processing, by the sparse processing unit (113), the transformed weight matrix to generate a binary sparse sequence, wherein "0" corresponds to the element of which the value is "0" in the transformed weight matrix, and "1" corresponds to the element of which the value is not "0" in the transformed weight matrix; and
         generating, by the mapping unit (114), a mapping table between the binary sparse sequence and a position of the element in the transformed neuron matrix;
         wherein a $K^{th}$ bit of the binary sparse sequence corresponds to the element locating in the $i^{th}$ row and the $j^{th}$ column of the neuron matrix with M rows and N columns, and $(i-1) \times N+j=K$ or $(j-1) \times M+i=K$;
         the controller (120) controlling the matrix multiplier (112) to perform the matrix multiplication operation according to the mapping table, wherein the element in the neuron matrix corresponding to a bit "0" in the binary sparse sequence does not perform the matrix multiplication operation.

11. The convolution method according to claim 10, **characterized in that**, the convolution method further comprises:

   storing the neuron matrix, the weight matrix, a transformed matrix C and a transformed matrix G in an on-chip cache, wherein the transformed matrix C is configured to perform the winograd transformation on the neuron matrix and the transformed matrix G is configured to perform the winograd transformation on the weight matrix;
   wherein, values of elements in the transformed matrix C and the transformed matrix G are $\pm 2^n$ or 0 independently, and n is an integer.

12. The convolution method according to claim 11, **characterized in that** the convolution method further comprises:

   storing, in the on-chip cache by using the on-chip cache, a matrix to be performed, the winograd inverse transformation and an inverse transformed matrix A performing the winograd inverse transformation on the neuron matrix;

wherein, values of elements in the inverse transformed matrix A are $\pm 2^n$ or 0, and n is an integer.

13. The convolution method according to claim 11, **characterized in that**, the convolution method further comprises: acquiring from the on-chip cache the transformed matrix C which performs the winograd transformation on the neuron matrix, and the transformed matrix G which performs the winograd transformation on the weight matrix; and storing in the on-chip cache the inverse transformed matrix A which performs the winograd inverse transformation on the neuron matrix, the convolution method further comprising:

receiving data about the dimension of an input neuron matrix and the weight matrix as well as the slides of convolution;
determining the transformed matrix C, the transformed matrix G and the inverse transformed matrix A according to a winograd algorithm based on a received data.

**Patentansprüche**

1. Faltungsoperationsvorrichtung (100) eines neuronalen Netzes zum Implementieren einer Faltung einer Gewichtsmatrix und einer Neuronenmatrix in einem neuronalen Netz durch eine Matrixmultiplikationsoperation, wobei die Faltungsoperationsvorrichtung (100) des neuronalen Netzes eine Arithmetikeinheit (110) und eine Steuereinheit (120) umfasst,

wobei die Arithmetikeinheit (110) eine Verschiebungsarithmetikeinheit (111) und einen Matrixmultiplizierer (112) umfasst, wobei
die Verschiebungsarithmetikeinheit (111) konfiguriert ist, eine Winograd-Transformation auf der Neuronenmatrix bzw. der Gewichtsmatrix auszuführen, um eine transformierte Neuronenmatrix und eine transformierte Gewichtsmatrix zu erhalten;
der Matrixmultiplizierer (112) konfiguriert ist, die Matrixmultiplikationsoperation, die die transformierte Neuronenmatrix und die transformierte Gewichtsmatrix miteinander multipliziert, auszuführen, um eine Multiplikationsmatrix zu erhalten;
die Verschiebungsarithmetikeinheit (111) ferner konfiguriert ist, eine inverse Winograd-Transformation auf der Multiplikationsmatrix auszuführen, um ein Faltungsergebnis zu erhalten;
wobei die Verschiebungsarithmetikeinheit (111) und der Matrixmultiplizierer (112) auf eine Weise verbunden sind, um eine bidirektionale Datenkommunikation zwischen der Verschiebungsarithmetikeinheit (111) und dem Matrixmultiplizierer (112) zu ermöglichen;
wobei die Steuereinheit (120) konfiguriert ist, die Verschiebungsarithmetikeinheit (111) zu steuern, die Winograd-Transformation oder die inverse Winograd-Transformation auszuführen, und den Matrixmultiplizierer (112) zu steuern, die Matrixmultiplikationsoperation auszuführen;
wobei die Arithmetikeinheit (110) ferner eine Verarbeitungseinheit (113) für dünne Besetzung umfasst, die konfiguriert ist, die transformierte Gewichtsmatrix dünn besetzt zu verarbeiten, um eine dünn besetzte Binärfolge zu erzeugen, wobei "0" dem Element, dessen Wert in der transformierten Gewichtsmatrix "0" ist, entspricht, und "1" dem Element, dessen Wert in der transformierten Gewichtsmatrix nicht "0" ist, entspricht;
wobei die Verarbeitungseinheit (113) für dünne Besetzung mit dem Matrixmultiplizierer (112) zum Empfangen von Daten von dem Matrixmultiplizierer (112) verbunden ist;
wobei die Arithmetikeinheit (110) ferner eine Abbildungseinheit (114) umfasst, die konfiguriert ist, eine Abbildungstabelle zwischen der dünn besetzten Binärfolge und einer Position des Elements in der transformierten Neuronenmatrix zu erzeugen;
wobei ein K-tes Bit der dünn besetzten Binärfolge dem Element entspricht, das sich in der i-ten Zeile und der j-ten Spalte der Neuronenmatrix mit M Zeilen und N Spalten befindet, und (i-1) x N+j = K oder (j-1) x M+i = K ist;
wobei die Abbildungseinheit (114) mit dem Matrixmultiplizierer (112) zum Senden von Daten zu dem Matrixmultiplizierer (112) verbunden ist und
die Abbildungseinheit (114) und die Verarbeitungseinheit (113) für dünne Besetzung auf eine Weise verbunden sind, um eine bidirektionale Datenkommunikation zwischen der Abbildungseinheit (114) und der Verarbeitungseinheit (113) für dünne Besetzung zu ermöglichen;
wobei die Steuereinheit (120) außerdem konfiguriert ist, den Matrixmultiplizierer (112) zu steuern, die Matrixmultiplikationsoperation gemäß der Abbildungstabelle auszuführen, wobei das Element in der Neuronenmatrix, das einem Bit "0" in der dünn besetzen Binärfolge entspricht, die Matrixmultiplikationsoperation nicht ausführt.

2. Faltungsoperationsvorrichtung (100) eines neuronalen Netzes nach Anspruch 1, **dadurch gekennzeichnet, dass**

**EP 3 557 484 B1**

die Faltungsoperationsvorrichtung (100) des neuronalen Netzes ferner einen On-Chip-Cache zum Speichern der Neuronenmatrix, der Gewichtsmatrix, einer transformierten Matrix C und einer transformierten Matrix G umfasst, wobei die transformierte Matrix C konfiguriert ist, die Winograd-Transformation auf der Neuronenmatrix auszuführen, und die transformierte Matrix G konfiguriert ist, die Winograd-Transformation auf der Gewichtsmatrix auszuführen.

3. Faltungsoperationsvorrichtung (100) eines neuronalen Netzes nach Anspruch 2, **dadurch gekennzeichnet, dass** Werte von Elementen in der transformierten Matrix C und der transformierten Matrix G $\pm 2^n$ bzw. 0 sind und n eine Ganzzahl ist.

4. Faltungsoperationsvorrichtung (100) eines neuronalen Netzes nach Anspruch 2, **dadurch gekennzeichnet, dass** der On-Chip-Cache ferner konfiguriert ist, eine zu auszuführende Matrix zu speichern, die inverse Winograd-Transformation zu speichern und ferner die inverse transformierte Matrix A, die die inverse Winograd-Transformation auf der Neuronenmatrix ausführt, zu speichern.

5. Faltungsoperationsvorrichtung (100) eines neuronalen Netzes nach Anspruch 4, **dadurch gekennzeichnet, dass** Werte von Elementen in der inversen transformierten Matrix A $\pm 2^n$ oder 0 sind und n eine Ganzzahl ist.

6. Faltungsoperationsvorrichtung (100) eines neuronalen Netzes nach Anspruch 2, **dadurch gekennzeichnet, dass** die Steuereinheit (120) konfiguriert ist, die Verschiebungsarithmetikeinheit (111) zu steuern, einen Binärwert jedes Elements in der Neuronenmatrix oder der Gewichtsmatrix unabhängig nach links oder rechts gemäß der transformierten Matrix C oder der transponierten Matrix $C^T$ davon zu verschieben; oder die Verschiebungsarithmetikeinheit (111) zu steuern, einen Binärwert jedes Elements in der Gewichtsmatrix zurückzusetzen oder unabhängig nach links oder rechts gemäß den Werten von Elementen in der transformierten Matrix G oder der transponierten Matrix $G^T$ davon zu verschieben.

7. Faltungsoperationsvorrichtung (100) eines neuronalen Netzes nach Anspruch 4, **dadurch gekennzeichnet, dass** die Steuereinheit (120) konfiguriert ist, die Binärwerte jedes Elements in der Multiplikationsmatrix zurückzusetzen oder unabhängig nach links oder rechts gemäß der inversen transformierten Matrix A oder der transponierten Matrix $A^T$ davon zu verschieben.

8. Faltungsoperationsvorrichtung (100) eines neuronalen Netzes nach Anspruch 1, **dadurch gekennzeichnet, dass** die Bits, die in der dünn besetzten Binärfolge von hoch zu niedrig sortiert sind, den zeilenweise oder spaltenweise gelesenen Elementen in der transformierten Gewichtsmatrix entsprechen.

9. Faltungsoperationsvorrichtung (100) eines neuronalen Netzes nach Anspruch 1, **dadurch gekennzeichnet, dass** ferner ein Addierer (115) enthalten ist, um die Ergebnisse einer durch die Verschiebungsarithmetikeinheit (111) gemäß Regeln der Matrixmultiplikation ausgeführten Verschiebungsoperation zu akkumulieren, wenn die Winograd-Transformation auf der Neuronenmatrix bzw. der Gewichtsmatrix ausgeführt wird.

10. Faltungsverfahren zum Implementieren einer Faltung einer Gewichtsmatrix und einer Neuronenmatrix in einem neuronalen Netz durch eine Matrixmultiplikationsoperation unter Verwendung einer Faltungsoperationsvorrichtung (100) eines neuronalen Netzes, die eine Arithmetikeinheit (110) und eine Steuereinheit (120) umfasst,

    wobei die Arithmetikeinheit (110) eine Verschiebungsarithmetikeinheit (111), einen Matrixmultiplizierer (112), eine Verarbeitungseinheit (113) für dünne Besetzung und eine Abbildungseinheit (114) umfasst,
    wobei die Verschiebungsarithmetikeinheit (111) und der Matrixmultiplizierer (112) auf eine Weise verbunden sind, um eine bidirektionale Datenkommunikation zwischen der Verschiebungsarithmetikeinheit (111) und dem Matrixmultiplizierer (112) zu ermöglichen),
    die Verarbeitungseinheit (113) für dünne Besetzung mit dem Matrixmultiplizierer (112) zum Empfangen von Daten von dem Matrixmultiplizierer (112) verbunden ist,
    die Abbildungseinheit (114) mit dem Matrixmultiplizierer (112) zum Senden von Daten zu dem Matrixmultiplizierer (112) verbunden ist, und
    die Abbildungseinheit (114) und die Verarbeitungseinheit (113) für dünne Besetzung auf eine Weise verbunden sind, um eine bidirektionale Datenkommunikation zwischen der Abbildungseinheit (114) und der Verarbeitungseinheit (113) für dünne Besetzung zu ermöglichen;
    wobei das Faltungsverfahren die folgenden Aktionen umfasst:

        Ausführen (S3) unter Verwendung der Verschiebungsarithmetikeinheit (111) einer Winograd-Transformation auf der Neuronenmatrix bzw. der Gewichtsmatrix mit einer Verschiebungsarithmetikeinheit (111) und einem Addierer (115), um eine transformierte Neuronenmatrix und eine transformierte Gewichtsmatrix zu erhalten;

Ausführen (S5) unter Verwendung des Matrixmultiplizierers (112) einer Matrixmultiplikationsoperation, die die transformierte Neuronenmatrix und die transformierte Gewichtsmatrix durch einen Matrixmultiplizierer (112) miteinander multipliziert, um eine Multiplikationsmatrix zu erhalten;

Ausführen (S6) unter Verwendung der Verschiebungsarithmetikeinheit (111) einer inversen Winograd-Transformation auf der Multiplikationsmatrix durch die Verschiebungsarithmetikeinheit (111) und den Addierer (115), um ein Faltungsergebnis zu erhalten; und

Steuern unter Verwendung der Steuereinheit (120) der Verschiebungsarithmetikeinheit (111), die Winograd-Transformation oder die inverse Winograd-Transformation auszuführen, und Steuern des Matrixmultiplizierers (112), die Matrixmultiplikationsoperation auszuführen;

wobei das Faltungsverfahren ferner Folgendes umfasst:

> Verarbeiten für dünne Besetzung durch die Verarbeitungseinheit (113) für dünne Besetzung der transformierten Gewichtsmatrix, um eine dünn besetzte Binärfolge zu erzeugen, wobei "0" dem Element, dessen Wert in der transformierten Gewichtsmatrix "0" ist, entspricht, und "1" dem Element, dessen Wert in der transformierten Gewichtsmatrix nicht "0" ist, entspricht; und
>
> Erzeugen durch die Abbildungseinheit (114) einer Abbildungstabelle zwischen der dünn besetzten Binärfolge und einer Position des Elements in der transformierten Neuronenmatrix;
>
> wobei ein K-tes Bit der dünn besetzten Binärfolge dem Element entspricht, das sich in der i-ten Zeile und der j-ten Spalte der Neuronenmatrix mit M Zeilen und N Spalten befindet, und (i-1) $\times$ N+j = K oder (j-1) $\times$ M+i = K ist;
>
> wobei die Steuereinheit (120) den Matrixmultiplizierer (112) steuert, die Matrixmultiplikationsoperation gemäß der Abbildungstabelle auszuführen, wobei das Element in der Neuronenmatrix, das einem Bit "0" in der dünn besetzen Binärfolge entspricht, die Matrixmultiplikationsoperation nicht ausführt.

11. Faltungsverfahren nach Anspruch 10, **dadurch gekennzeichnet, dass** das Faltungsverfahren ferner Folgendes umfasst:

> Speichern der Neuronenmatrix, der Gewichtsmatrix, einer transformierten Matrix C und einer transformierten Matrix G in einem On-Chip-Cache, wobei die transformierte Matrix C konfiguriert ist, die Winograd-Transformation auf der Neuronenmatrix auszuführen, und die transformierte Matrix G konfiguriert ist, die Winograd-Transformation auf der Gewichtsmatrix auszuführen;
>
> wobei Werte von Elementen in der transformierten Matrix C und der transformierten Matrix G unabhängig $\pm 2^n$ oder 0 sind und n eine Ganzzahl ist.

12. Faltungsverfahren nach Anspruch 11, **dadurch gekennzeichnet, dass** das Faltungsverfahren ferner Folgendes umfasst:

> Speichern in dem On-Chip-Cache unter Verwendung des On-Chip-Cache einer auszuführenden Matrix, der inversen Winograd-Transformation und einer inversen transformierten Matrix A, die die inverse Winograd-Transformation auf der Neuronenmatrix ausführt;
>
> wobei die Werte von Elementen in der inversen transformierten Matrix A $\pm 2^n$ oder 0 sind und n eine Ganzzahl ist.

13. Faltungsverfahren nach Anspruch 11, **dadurch gekennzeichnet, dass** das Faltungsverfahren ferner Folgendes umfasst:

Erfassen aus dem On-Chip-Cache der transformierten Matrix C, die die Winograd-Transformation auf der Neuronenmatrix ausführt, und der transformierten Matrix G, die die Winograd-Transformation auf der Gewichtsmatrix ausführt; und Speichern in dem On-Chip-Cache der inversen transformierten Matrix A, die die inverse Winograd-Transformation auf der Neuronenmatrix ausführt, wobei das Faltungsverfahren ferner Folgendes umfasst:

> Empfangen von Daten über sowohl die Dimension einer eingegebenen Neuronenmatrix und der Gewichtsmatrix als auch das Gleiten der Faltung;
>
> Bestimmen der transformierten Matrix C, der transformierten Matrix G und der inversen transformierten Matrix A gemäß einem Winograd-Algorithmus basierend auf empfangenen Daten.

**Revendications**

1. Dispositif d'opération de convolution de réseau de neurones (100) pour mettre en œuvre une convolution d'une matrice de poids et d'une matrice neuronale dans un réseau de neurones par une opération de multiplication de matrices, le dispositif d'opération de convolution de réseau de neurones (100) comprenant une unité arithmétique (110) et un contrôleur (120),

   où l'unité arithmétique (110) comprend une unité arithmétique de décalage (111) et un multiplicateur matriciel (112), où :

   l'unité arithmétique de décalage (111) est configurée pour effectuer une transformation de Winograd sur la matrice neuronale et la matrice de poids, respectivement, de manière à obtenir une matrice neuronale transformée et une matrice de poids transformée ;

   le multiplicateur matriciel (112) est configuré pour effectuer l'opération de multiplication de matrices qui multiplie ensemble la matrice neuronale transformée et la matrice de poids transformée, de manière à obtenir une matrice de multiplication ;

   l'unité arithmétique de décalage (111) est en outre configurée pour effectuer une transformation inverse de Winograd sur la matrice de multiplication pour obtenir un résultat de convolution ;

   où l'unité arithmétique de décalage (111) et le multiplicateur matriciel (112) sont connectés de manière à permettre une communication de données bidirectionnelle entre l'unité arithmétique de décalage (111) et le multiplicateur matriciel (112) ;

   où le contrôleur (120) est configuré pour commander l'unité arithmétique de décalage (111) pour effectuer la transformation de Winograd ou la transformation inverse de Winograd, et commander le multiplicateur matriciel (112) pour effectuer l'opération de multiplication de matrices ;

   où l'unité arithmétique (110) comprend en outre une unité de traitement ponctuel (113) configurée pour traiter de manière ponctuelle la matrice de poids transformée pour générer une séquence binaire ponctuelle, dans laquelle « 0 » correspond à l'élément dont la valeur est « 0 » dans la matrice de poids transformée, et « 1 » correspond à l'élément dont la valeur n'est pas « 0 » dans la matrice de poids transformée ;

   où l'unité de traitement ponctuel (113) est connectée au multiplicateur matriciel (112) pour recevoir des données du multiplicateur matriciel (112) ;

   où l'unité arithmétique (110) comprend en outre une unité de mappage (114) configurée pour générer une table de mappage entre la séquence binaire ponctuelle et une position de l'élément dans la matrice neuronale transformée ;

   où un $K^{\text{ème}}$ bit de la séquence binaire ponctuelle correspond à l'élément situé dans la $i^{\text{ème}}$ ligne et la $j^{\text{ème}}$ colonne de la matrice neuronale ayant M lignes et N colonnes, et $(i-1) \times N+j = K$ ou $(j-1) \times M+i = K$ ;

   où l'unité de mappage (114) est connectée au multiplicateur matriciel (112) pour transmettre des données au multiplicateur matriciel (112), et

   l'unité de mappage (114) et l'unité de traitement ponctuel (113) sont connectées de manière à permettre une communication bidirectionnelle de données entre l'unité de mappage (114) et l'unité de traitement ponctuel (113) ;

   où le contrôleur (120) est également configuré pour commander le multiplicateur matriciel (112) pour effectuer l'opération de multiplication de matrices selon la table de mappage, où l'élément dans la matrice neuronale correspondant à un bit « 0 » dans la séquence binaire ponctuelle n'effectue pas l'opération de multiplication de matrices.

2. Dispositif d'opération de convolution de réseau de neurones (100) selon la revendication 1, **caractérisé en ce que** le dispositif d'opération de convolution de réseau de neurones (100) comprend en outre une mémoire cache sur puce pour stocker la matrice neuronale, la matrice de poids, une matrice transformée C et une matrice transformée G, où la matrice transformée C est configurée pour effectuer la transformation de Winograd sur la matrice neuronale et la matrice transformée G est configurée pour effectuer la transformation de Winograd sur la matrice de poids.

3. Dispositif d'opération de convolution de réseau de neurones (100) selon la revendication 2, **caractérisé en ce que** les valeurs des éléments dans la matrice transformée C et la matrice transformée G sont respectivement $\pm 2^n$ ou 0, et n est un entier.

4. Dispositif d'opération de convolution de réseau de neurones (100) selon la revendication 2, **caractérisé en ce que** la mémoire cache sur puce est en outre configurée pour stocker une matrice à exécuter, pour stocker la transformation inverse de Winograd et pour stocker en outre une matrice transformée inverse A exécutant la transformation inverse de Winograd sur la matrice neuronale.

**5.** Dispositif d'opération de convolution de réseau de neurones (100) selon la revendication 4, **caractérisé en ce que** les valeurs des éléments dans la matrice transformée inverse A sont $\pm 2^n$ ou 0, et n est un entier.

**6.** Dispositif d'opération de convolution de réseau de neurones (100) selon la revendication 2, **caractérisé en ce que** le contrôleur (120) est configuré pour commander l'unité arithmétique de décalage (111) pour décaler une valeur binaire de chaque élément dans la matrice neuronale ou la matrice de poids, vers la gauche ou vers la droite, indépendamment, selon la matrice transformée C ou la matrice transposée $C^T$ de celle-ci ; ou commander l'unité arithmétique de décalage (111) pour réinitialiser ou décaler une valeur binaire de chaque élément dans la matrice de poids, vers la gauche ou vers la droite, indépendamment, selon les valeurs des éléments dans la matrice transformée G ou la matrice transposée $G^T$ de celle-ci.

**7.** Dispositif d'opération de convolution de réseau de neurones (100) selon la revendication 4, **caractérisé en ce que** le contrôleur (120) est configuré pour réinitialiser ou décaler les valeurs binaires de chaque élément dans la matrice de multiplication vers la gauche ou vers la droite, indépendamment, selon la matrice transformée inverse A ou la matrice transposée $A^T$ de celle-ci.

**8.** Dispositif d'opération de convolution de réseau de neurones (100) selon la revendication 1, **caractérisé en ce que** les bits triés de haut en bas dans la séquence binaire ponctuelle correspondent aux éléments lus ligne par ligne ou colonne par colonne dans la matrice de poids transformée.

**9.** Dispositif d'opération de convolution de réseau de neurones (100) selon la revendication 1, **caractérisé en ce qu'**un additionneur (115) est en outre compris pour accumuler les résultats d'une opération de décalage effectuée par l'unité arithmétique de décalage (111) selon des règles de multiplication de matrices lorsque la transformation de Winograd est effectuée sur la matrice neuronale et la matrice de poids, respectivement.

**10.** Procédé de convolution pour mettre en œuvre une convolution d'une matrice de poids et d'une matrice neuronale dans un réseau de neurones par une opération de multiplication de matrices en utilisant un dispositif d'opération de convolution de réseau de neurones (100) comprenant une unité arithmétique (110) et un contrôleur (120),

où l'unité arithmétique (110) comprend une unité arithmétique de décalage (111), un multiplicateur matriciel (112), une unité de traitement ponctuel (113) et une unité de mappage (114),
où l'unité arithmétique de décalage (111) et le multiplicateur matriciel (112) sont connectés de manière à permettre une communication bidirectionnelle de données entre l'unité arithmétique de décalage (111) et le multiplicateur matriciel (112),
l'unité de traitement ponctuel (113) est connectée au multiplicateur matriciel (112) pour recevoir des données du multiplicateur matriciel (112),
l'unité de mappage (114) est connectée au multiplicateur matriciel (112) pour transmettre des données au multiplicateur matriciel (112), et
l'unité de mappage (114) et l'unité de traitement ponctuel (113) sont connectées de manière à permettre une communication bidirectionnelle de données entre l'unité de mappage (114) et l'unité de traitement ponctuel (113) ;
le procédé de convolution comprenant les actions suivantes :

effectuer (S3), en utilisant l'unité arithmétique de décalage (111), une transformation de Winograd sur la matrice neuronale et la matrice de poids, respectivement, avec une unité arithmétique de décalage (111) et un additionneur (115) pour obtenir une matrice neuronale transformée et une matrice de poids transformée ;
effectuer (S5), en utilisant le multiplicateur matriciel (112), une opération de multiplication de matrices qui multiplie ensemble la matrice neuronale transformée et la matrice de poids transformée par un multiplicateur matriciel (112) de manière à obtenir une matrice de multiplication ;
effectuer (S6), en utilisant l'unité arithmétique de décalage (111), une transformation inverse de Winograd sur la matrice de multiplication par l'unité arithmétique de décalage (111) et l'additionneur (115) pour obtenir un résultat de convolution ; et
commander, en utilisant le contrôleur (120), l'unité arithmétique de décalage (111) pour effectuer la transformation de Winograd ou la transformation inverse de Winograd et pour commander le multiplicateur matriciel (112) pour effectuer l'opération de multiplication de matrices ;
le procédé de convolution comprenant en outre les étapes suivantes :

traiter de manière ponctuelle, par l'unité de traitement ponctuel (113), la matrice de poids transformée pour générer une séquence binaire ponctuelle, dans laquelle « 0 » correspond à l'élément dont la valeur est « 0 » dans la matrice de poids transformée, et « 1 » correspond à l'élément dont la valeur n'est pas « 0 » dans la matrice de poids transformée ; et

générer, par l'unité de mappage (114), une table de mappage entre la séquence binaire ponctuelle et une position de l'élément dans la matrice neuronale transformée ;

où un $K^{\text{ème}}$ bit de la séquence binaire ponctuelle correspond à l'élément situé dans la $i^{\text{ème}}$ ligne et la $j^{\text{ème}}$ colonne de la matrice neuronale ayant M lignes et N colonnes, et (i-1) X N+j = K ou (j-1) X M+i = K ;

le contrôleur (120) commandant le multiplicateur matriciel (112) pour effectuer l'opération de multiplication de matrices selon la table de mappage, où l'élément dans la matrice neuronale correspondant à un bit « 0 » dans la séquence binaire ponctuelle n'effectue pas l'opération de multiplication de matrices.

11. Procédé de convolution selon la revendication 10, **caractérisé en ce que** le procédé de convolution comprend en outre les étapes suivantes :

stocker la matrice neuronale, la matrice de poids, une matrice transformée C et une matrice transformée G dans une mémoire cache sur puce, où la matrice transformée C est configurée pour effectuer la transformation de Winograd sur la matrice neuronale, et la matrice transformée G est configurée pour effectuer la transformation de Winograd sur la matrice de poids ;

où les valeurs des éléments dans la matrice transformée C et la matrice transformée G sont $\pm 2^n$ ou 0, indépendamment, et n est un nombre entier.

12. Procédé de convolution selon la revendication 11, **caractérisé en ce que** le procédé de convolution comprend en outre l'étape suivante :

stocker, dans la mémoire cache sur puce, en utilisant la mémoire cache sur puce, une matrice à exécuter, la transformation inverse de Winograd et une matrice transformée inverse A exécutant la transformation inverse de Winograd sur la matrice neuronale ;

où les valeurs des éléments dans la matrice transformée inverse A sont $\pm 2^n$ ou 0, et n est un nombre entier.

13. Procédé de convolution selon la revendication 11, **caractérisé en ce que** le procédé de convolution comprend en outre les étapes suivantes :

acquérir, à partir de la mémoire cache sur puce, la matrice transformée C qui effectue la transformation de Winograd sur la matrice neuronale, et la matrice transformée G qui effectue la transformation de Winograd sur la matrice de poids ; et stocker dans la mémoire cache sur puce la matrice transformée inverse A qui effectue la transformation inverse de Winograd sur la matrice neuronale, le procédé de convolution comprenant en outre les étapes suivantes :

recevoir des données concernant la dimension d'une matrice neuronale d'entrée et de la matrice de poids ainsi que les tranches de convolution ;

déterminer la matrice transformée C, la matrice transformée G et la matrice transformée inverse A selon un algorithme de Winograd sur la base des données reçues.

FIG.1

NEURAL NETWORK CONVOLUTION DEVICE 100

Operator 110

Shift Operator 111

Adder 115

Matrix Multiplication Operator 112

Sparse Processing Unit 113

Mapping Unit 114

Controller 120

Data cache unit 130

# FIG. 2

STEP 1 — Performing winograd transformation on the neuron matrix and the weight matrix respectively with a shift operator and an adder to obtain a transformed neuron matrix and a transformed weight matrix;

STEP 2 — Performing a matrix multiplication operation on the transformed neuron matrix and the transformed weight matrix with a matrix multiplication operator to obtain a multiplication matrix;

STEP 3 — Performing a winograd inverse transformation on the multiplication matrix with a shift operator to obtain a convolution result.

# FIG. 3

| Matrix corresponding element | Row 1 Column 1 | Row 1 Column 2 | Row 2 Column 1 | Row 2 Column 2 | Row 3 Column 1 | Row 3 Column 2 |
|---|---|---|---|---|---|---|
| Sparse Sequence | The 1st numerical value | The 2nd numerical value | The 3rd numerical value | The 4th numerical value | The 5th numerical value | The 6th numerical value |

FIG. 4

Convolution Kernel

Convolution

Image         Convolution Results

FIG. 5

S1 — The controller reads an instruction from memory.

S2 — The controller obtains a microinstruction after decoding, according to which a convolution device for neural network reads from an external address space data required for

S3 — The shift operator and the adder perform winograd transformation on the neuron matrix $d_0$ and the weight matrix $w_0$.

S4 — The sparse processing unit obtains a sparse sequence according to the transformed weight matrix $w$.

S5 — The matrix multiplication operator selects corresponding neurons according to the sparse sequence so as to perform a multiplication operation by weights.

S6 — The shift operator and the adder perform winograd inverse transformation on the result of matrix multiplication.

FIG.6

| Neural Network Operation Device | General Interconnection Interface | Other Processing Device |

Storage Device

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105512723 A

**Non-patent literature cited in the description**

- Zero and Data Reuse-aware Fast Convolution for Deep Neural Networks on GPU. **PARK HYUNSUN et al.** 2016 International Conference on Hardware/Software Codesign and System Synthesis (Codes+ISSS). ACM, 02 October 2016, 1-10